(19) Europäisches Patentamt
European Patent Office
Office européen des brevets

(11) Veröffentlichungsnummer: **0 131 733 B1**

# (12) EUROPÄISCHE PATENTSCHRIFT

(45) Veröffentlichungstag der Patentschrift: **16.09.87**

(51) Int. Cl.⁴: **C 09 B 29/42**, C 09 B 45/00, G 03 C 5/50

(21) Anmeldenummer: **84106446.2**

(22) Anmeldetag: **06.06.84**

(54) **Mit Metallionen chelatisierbare oder chelatisierte Monoazofarbstoffe, deren Verwendung zur Bilderzeugung, ein farbfotografisches Aufzeichnungsmaterial mit Farbabspaltern, die die Farbstoffe freisetzen, und ein Farbbild mit einer bildmässigen Verteilung von Nickelkomplexen der Farbstoffe.**

(30) Priorität: **18.06.83 DE 3322058**

(43) Veröffentlichungstag der Anmeldung: **23.01.85 Patentblatt 85/4**

(45) Bekanntmachung des Hinweises auf die Patenterteilung: **16.09.87 Patentblatt 87/38**

(84) Benannte Vertragsstaaten: **BE CH DE FR GB LI**

(56) Entgegenhaltungen:
**EP - A - 0 045 633**
**DE - A - 2 236 299**
**FR - A - 2 249 132**
**US - A - 4 357 412**

**CHEMICAL ABSTRACTS, Band 96, Nr. 12, März 1982, Seite 70, Nr. 86880d, Columbus, Ohio, US; S.A. SIDDIQUI u.a.: "The effect of ortho substitution on the color of azo disperse dyes on polyester substrate"**

(73) Patentinhaber: **Agfa-Gevaert AG, Patentabteilung, D-5090 Leverkusen 1 (DE)**

(72) Erfinder: **Stolzenburg, Rudolf, Dipl.-Ing., Bogenstrasse 27, D-4018 Langenfeld (DE)**
Erfinder: **Bergthaller, Peter, Dr., Leuchter Gemark 5a, Bergisch-Gladbach 2 (DE)**
Erfinder: **Wolfrum, Gerhard, Dr., Domblick 17, D-5090 Leverkusen 3 (DE)**
Erfinder: **Strauss, Jürgen, Dr., Andreas-Gryphius-Strasse 24, D-5000 Köln 80 (DE)**

EP 0 131 733 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Azofarbstoffe, die mit Metallionen komplexierbar sind und die insbesondere mit Nickelionen stabile purpurfarbige Farbstoff-Metall-Komplexe bilden, und die Verwendung dieser Farbstoffe zur Erzeugung von lichtechten purpurnen Bildern, z.B. nach dem Ink-Jet-Verfahren oder nach dem Farbdiffusionsübertragungsverfahren.

Die Erfindung betrifft weiter ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der bei der Entwicklung ein diffusionsfähiger komplexierbarer Azofarbstoff freigesetzt wird.

Das Farbdiffusionsübertragungsverfahren beruht darauf, dass bei der Entwicklung in einem lichtempfindlichen Element nach Massgabe einer vorangegangenen Belichtung eine bildmässige Verteilung diffusionsfähiger Farbstoffe erzeugt und auf ein Bildempfangselement übertragen wird. In einigen Fällen lässt sich die Lichtechtheit der nach einem solchen Verfahren erzeugten Farbbilder in bekannter Weise dadurch verbessern, dass durch Metallionen komplexierbare Farbstoffe verwendet werden, z.B. Farbstoffe die durch nachträgliche Behandlung mit geeigneten Metallionen stabile Farbstoff-Metall-Tridentatkomplexe bilden. Die Verbesserung der Lichtechtheit von Azofarbstoffbildern, die nach dem Farbdiffusionsübertragungsverfahren oder nach einem anderen fotografischen Verfahren, etwa nach dem Silberfarbbleichverfahren erhalten worden sind, durch Komplexierung mit Metallionen ist beispielsweise bekannt aus DE-B-1 116 532 oder DE-B-1 125 279.

6-Arylazo-3-pyridinol-Farbstoffe, die aus Farbabspaltern freigesetzt werden können und mit Metallionen farbige Komplexe bilden, sind bekannt aus US-A-4 142 891, US-A-4 195 994, US-A-4 142 292, US-A-4 357 412 und EP-A-0 045 633. Die bekannten Farbstoffe enthalten in dem Arylteil benachbart zur Azogruppe eine zur Chelatbildung befähigte Gruppe und bilden dementsprechend mit Metallionen blaugrüne oder purpurne Farbstoff-Metall-Tridentatkomplexe, die gute spektrale Eigenschaften haben sollen.

Der vorliegenden Erfindung liegt die Aufgabe zugrunde nachmetallisierbare Monoazofarbstoffe bereitzustellen, die sich in Form ihrer Metallkomplexe durch besonders klare purpurne Farbtöne sowie durch aussergewöhnlich gute Lichtechtheit auszeichnen.

Es wurde gefunden, dass diese Aufgabe durch Bereitstellung von Monoazofarbstoffen der folgenden Formel I gelöst werden kann.

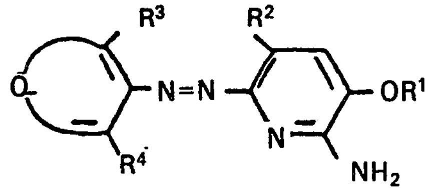

I

worin bedeuten

Q den zur Vervollständigung einer Phenyl- oder Naphthylgruppe erforderlichen Rest;

$R^1$ H;

$R^2$ H, Halogen z.B. Cl, oder eine Alkyl- oder Arylsulfonylgruppe; und

$R^3$ und $R^4$ (gleich oder verschieden) H oder einen nicht zur Chelatbildung befähigten Substituenten.

Ein Gegenstand der Erfindung sind neue Monoazofarbstoffe der angegebenen Formel I und deren Metallkomplexe, insbesondere deren Nickelkomplexe.

Ein weiterer Gegenstand der Erfindung ist die Verwendung der Farbstoffe der Formel I zur Erzeugung von lichtstabilen purpurnen Bildern, z.B. nach dem Ink-Jet-Verfahren oder nach dem Farbdiffusionsübertragungsverfahren.

Ein weiterer Gegenstand der Erfindung ist ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung (Farbabspalter) enthält, aus der unter den Bedingungen der alkalischen Entwicklung als Funktion der Entwicklung der Silberhalogenidemulsionsschicht ein diffusionsfähiger durch Metallionen komplexierbarer Monoazofarbstoff freigesetzt wird, dadurch gekennzeichnet, dass der Monoazofarbstoff der Formel I entspricht.

Ein weiterer Gegenstand der Erfindung ist schliesslich ein Farbbild, bestehend aus einer auf einem Schichtträger angeordneten bildmässigen Verteilung eines purpurnen Farbstoffes, dadurch gekennzeichnet, dass der purpurne Farbstoff ein Nickelkomplex eines Monoazofarbstoffes der Formel I ist.

Bevorzugte Monoazofarbstoffe der vorliegenden Erfindung werden insbesondere durch die folgende Formel II dargestellt:

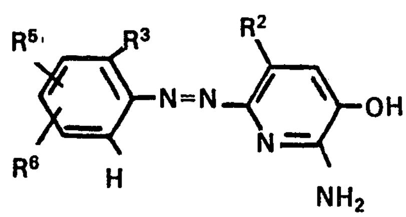

II

worin $R^2$ und $R^3$ im wesentlichen die bereits angegebene Bedeutung haben und $R^5$ und $R^6$ für Wasserstoff oder beliebige Substituenten stehen.

Die durch $R^3$ dargestellten (von H verschiedenen) Substituenten sind beispielsweise Halogen, z.B. Cl oder Br, Alkyl, Alkoxy, $-CN$, $-CF_3$ oder Carbamoyl oder $R^3$ steht zusammen mit $R^5$ für ei-

nen Rest zur Vervollständigung eines ankondensierten gegebenenfalls substituierten Benzolringes.

Die durch $R^5$ und $R^6$ dargestellten (von H verschiedenen) Substituenten sind beispielsweise Halogen, z.B. Cl oder Br, –CN, Carbalkoxy, Carbamoyl, Sulfinsäure (Sulfinat), Sulfonsäure (Sulfonat), Sulfamoyl, Alkylsulfonyl, Arylsulfonyl oder (in m-Stellung zur Azogruppe)–$NO_2$ oder $R^5$ steht zusammen mit $R^3$ oder $R^6$ für einen Rest zur Vervollständigung eines ankondensierten gegebenenfalls substituierten Benzolringes.

Die in den Definitionen $R^2$ bis $R^6$ genannten Alkylgruppen enthalten vorzugsweise nicht mehr als 4 C-Atome; bevorzugte Beispiele sind Methyl, Ethyl, n-Propyl, Isopropyl, n-Butyl.

Die in den Definitionen $R^2$, $R^5$ und $R^6$ genannten Arylgruppen sind vorzugsweise Phenylgruppen; sie können weiter substituiert sein, z.B. durch Halogen, Alkyl, Alkoxy, Acylamino, Sulfamoyl, Sulfinat, jedoch umfassen sie einschliesslich solcher Substituenten vorzugsweise nicht mehr als 10 C-Atome.

Die erwähnten Carbamoylreste und Sulfamoylreste können am Stickstoffatom unsubstituiert sein oder ein- oder zweifach substituiert durch Alkyl oder Aryl oder substituiert mit einem Rest, der zusammen mit dem Stickstoffatom den Ring einer cyclischen Aminogruppe vervollständigt, z.B. einen Pyrrolidin-, Piperidin-, Perhydroazepin-, Morpholin-, Indolin- oder Tetrahydrochinolinring.

Acylreste (Acylamino) leiten sich allgemein ab von aliphatischen oder aromatischen Carbon- oder Sulfonsäuren, von Carbaminsäuren oder Sulfaminsäuren oder von Kohlensäurehalbestern. Hydrolysierbare Acylreste sind insbesondere von aliphatischen Carbonsäuren oder Kohlensäurehalbestern abgeleitet.

Mit obigen Angaben ist das für die spektralen Eigenschaften verantwortliche chromophore System der erfindungsgemässen Monoazofarbstoffe vollständig beschrieben.

Die Farbstoffe bilden mit Metallionen stabile Farbstoff-Metall-Komplexe. Hierbei handelt es sich vermutlich um Farbstoff-Metall-Bidentat-Komplexe.

Geeignete Metallionen sind beispielsweise die Ionen von Cu, Ni, Co, Al und Zn. Die Nickelkomplexe sind wegen ihrer klaren purpurnen Farbtöne bevorzugt.

Die Farbstoffe können darüber hinaus zur Anpassung an einen speziellen Anwendungszweck weitere geeignete Substituenten enthalten. So verfügen die Farbstoffe der Formel I bei Anwendung im Farbdiffusionsübertragungsverfahren, z.B. in Form einiger der bereits bei $R^1$ bis $R^6$ erwähnten Gruppen oder in Form von Substituenten, die gegebenenfalls über ein geeignetes Bindeglied an eine dieser Gruppen gebunden sind, über geeignete funktionelle Gruppen zur Einstellung eines günstigen Diffusions- und Beizverhaltens, z.B. über anionische oder anionisierbare Gruppen, wie Sulfonat-, Sulfinat-, Phenolat-, Carboxylat-, Disulfimid- oder Sulfamoylgruppen, sowie über eine funktionelle Gruppe, die aus der Aufspaltung einer Bindung an einen mit einer Ballastgruppe versehenen Trägerrest resultiert und für die Art des Trägerrestes und die Anknüpfung daran charakteristisch ist. Die zuletzt genannte funktionelle Gruppe kann identisch sein mit den zuvor genannten das Diffusions- und Beizverhalten modifizierenden Gruppen. Die erwähnte funktionelle Gruppe kann beispielsweise an einen Alkyl-, Hetaryl- oder Arylrest gebunden sein, der seinerseits Bestandteil eines der unter $R^1$ bis $R^6$ erwähnten Substituenten ist. Bei Anwendung im Ink-Jet-Verfahren sind derartige funktionelle Gruppen im allgemeinen nicht erforderlich.

Den erfindungsgemässen neuen Farbstoffen der Formel I ist eigen, dass die Absorptionsspektren der Farbstoffe gegenüber denen der Komplexe nach kürzeren Wellenlängen verschoben sind.

Im Falle des Farbdiffusionsübertragungsverfahrens bezieht sich die Formel I bzw. II auf die erfindungsgemäss bei der Entwicklung freigesetzten diffusionsfähigen Farbstoffe. Diese werden freigesetzt aus entsprechenden eingelagerten nichtdiffundierenden farbgebenden Verbindungen (Farbabspalter). Hierbei handelt es sich um Verbindungen, in denen ein Farbstoffrest gemäss Formel I bzw. II an einen mindestens eine Ballastgruppe enthaltenden Trägerrest CAR gebunden ist, gegebenenfalls unter Zwischenschaltung eines geeigneten Bindegliedes.

Die Anknüpfung des Farbstoffes der Formel I an den Trägerrest kann beispielsweise über einen der Substituenten $R^1$ bis $R^6$ erfolgen. Die erfindungsgemässen Farbabspalter lassen sich dementsprechend durch die folgende Formel III darstellen.

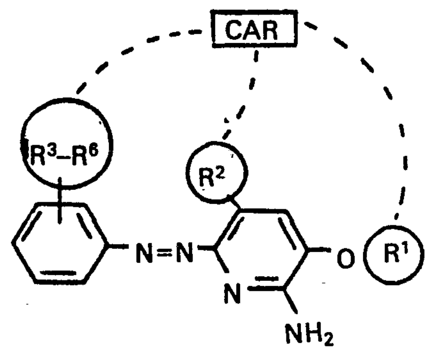

III

worin

$R^1$ bis $R^6$ die bereits angegebenen Bedeutungen haben,

CAR einen mindestens eine diffusionsfestmachende Gruppe enthaltenden Trägerrest bedeutet, und die gestrichelten Linien mögliche Verknüpfungsstellen kennzeichnen. In den erfindungsgemässen Farbabspaltern der Formel III ist somit der Trägerrest als Substituent in einer der durch $R^1$ bis $R^6$ dargestellten Gruppen enthalten.

Der durch CAR dargestellte Trägerrest weist ausser der diffusionsfestmachenden Gruppe mindestens eine Gruppierung auf, die als Funktion der Entwicklung einer Silberhalogenidemulsionsschicht spaltbar ist, so dass der an den Trägerrest

gebundene Farbstoff gegebenenfalls zusammen mit einem kleinen Bruchstück des ursprünglichen Trägerrestes von der diffusionsfestmachenden Gruppe abgetrennt und somit aus der Verankerung in der Schicht gelöst werden kann. Je nach der Funktionsweise der spaltbaren Gruppierung können die Trägerreste unterschiedliche Strukturen aufweisen.

Bei den erfindungsgemässen Farbabspaltern kann es sich um eine Vielfalt von Verbindungstypen handeln, die sich sämtlich durch ein in seiner Bindungsfestigkeit redoxabhängiges Bindeglied auszeichnen, welches den Chromophor mit dem diffusionsfesten Trägerrest verknüpft.

In diesem Zusammenhang ist auf eine zusammenfassende Darstellung des Sachgebiets in Angew. Chem. 95, Heft 3, Seiten 165–184 zu verweisen, in der die wichtigsten der bekannten Systeme beschrieben sind.

Als besonders vorteilhaft erweisen sich hierbei redoxaktive Farbabspalter der Formel

BALLAST-REDOX-FARBSTOFFE,

worin bedeuten

BALLAST einen Ballastrest

REDOX eine redoxaktive Gruppe, d.h. eine Gruppe, die unter den Bedingungen der alkalischen Entwicklung oxidierbar oder reduzierbar ist und jenachdem, ob sie im oxidierten oder im reduzierten Zustand vorliegt, in unterschiedlichem Ausmass einer Eliminierungsreaktion, einer nukleophilen Verdrängungsreaktion, einer Hydrolyse oder einer sonstigen Spaltungsreaktion unterliegt mit der Folge, dass der Rest FARBSTOFF abgespalten wird, und

FARBSTOFF den Rest eines diffusionsfähigen Farbstoffes, im vorliegenden Fall eines Farbstoffes gemäss Formel I.

Als Ballastreste sind solche Reste anzusehen, die es ermöglichen, die erfindungsgemässen Farbabspalter in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 20 C-Atomen und gegebenenfalls auch carbocyclische oder heterocyclische gegebenenfalls aromatische Gruppen enthalten. Mit dem übrigen Molekülteil sind diese Reste entweder direkt oder indirekt, z.B. über eine der folgenden Gruppen verbunden: $-NHCO-$, $-NHSO_2-$, $-NR-$, wobei R Wasserstoff oder Alkyl bedeutet, $-O-$ oder $-S-$. Zusätzlich kann der Ballastrest auch wasserlöslichmachende Gruppen enthalten, wie z.B. Sulfogruppen oder Carboxylgruppen, die auch in anionischer Form vorliegen können. Da die Diffusionseigenschaften von der Molekülgrösse der verwendeten Gesamtverbindung abhängen, genügt es in bestimmten Fällen, z.B., wenn das verwendete Gesamtmolekül gross genug ist, als Ballastreste auch kürzerkettige Reste zu verwenden.

Redoxaktive Trägerreste der Struktur BALLAST-REDOX- und entsprechende Farbabspalter sind in den verschiedensten Ausführungsformen bekannt. Auf eine detaillierte Darstellung kann an dieser Stelle verzichtet werden im Hinblick auf den genannten Übersichtsartikel im Angew. Chem. 95, S. 165–184 (1983).

Lediglich zur Erläuterung sind im folgenden einige Beispiele für redoxaktive Trägerreste aufgeführt, von denen nach Massgabe einer bildmässig stattgefundenen Oxidation oder Reduktion abgespalten wird:

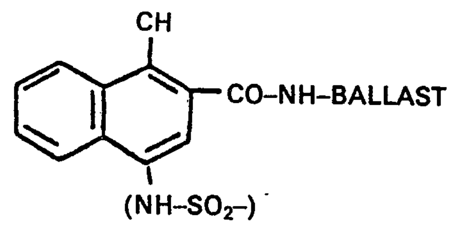

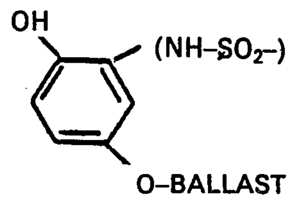

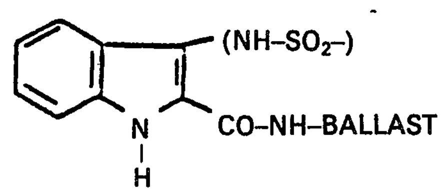

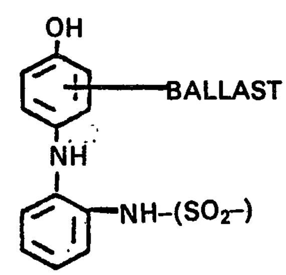

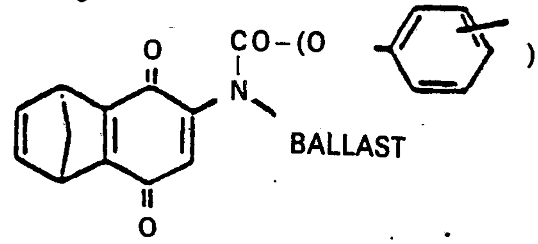

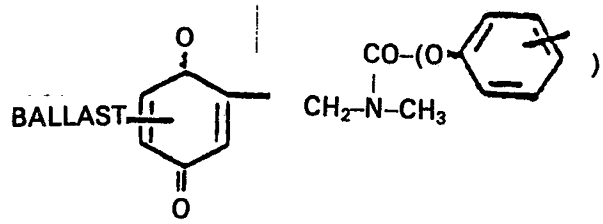

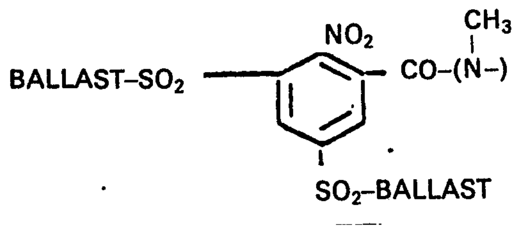

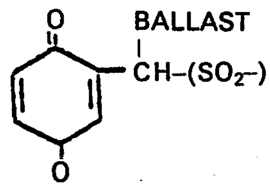

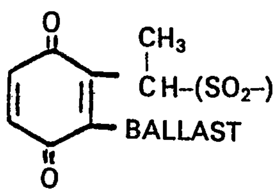

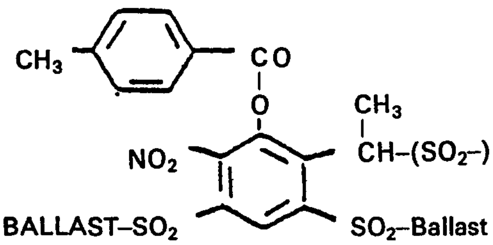

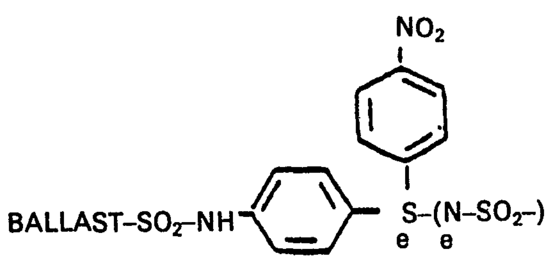

Die in Klammern eingeschlossenen Gruppen, sind funktionelle Gruppen des Farbstoffrestes und werden zusammen mit diesem vom zurückbleibenden Teil des Trägerrestes abgetrennt. Bei der funktionellen Gruppe kann es sich um einen der Substituenten handeln, die bei der Erläuterung der Bedeutung der Reste $R^1$ bis $R^6$ in den Formeln I und II erwähnt worden sind und die einen unmittelbaren Einfluss auf die Absorptions- und Komplexbildungseigenschaften der erfindungsgemässen Farbstoffe ausüben können. Die funktionelle Gruppe kann andererseits aber auch von dem Chromophor des erfindungsgemässen Farbstoffes durch ein Zwischenglied getrennt sein, indem sie sich als Substituent in einer der für $R^1$ bis $R^6$ definierten Gruppen befindet, ohne dass hierdurch ein Einfluss auf die Absorptions- und Komplexbildungseigenschaften wirksam werden müsste. Die funktionelle Gruppe kann jedoch gegebenenfalls zusammen mit dem Zwischenglied von Bedeutung sein für das Diffusions- und Beizverhalten der erfindungsgemässen Farbstoffe. Geeignete Zwischenglieder sind beispielsweise Alkylen- oder Arylengruppen.

Die zuletzt erwähnten Klassen von reduzierbaren, reduktiv spaltbaren Farbabspaltern werden zweckmässigerweise zusammen mit sogenannten Elektronendonorverbindungen (ED-Verbindungen) verwendet. Letztere wirken als Reduktionsmittel, das bei der Entwicklung des Silberhalogenids bildmässig verbraucht wird und mit seinem nicht verbrauchten Anteil seinerseits den zugeordneten Farbabspalter reduziert und dadurch die Abspaltung des Farbstoffes bewirkt. Geeignete ED-Verbindungen sind beispielsweise nicht oder nur wenig diffundierende Derivate des Hydrochinons, des Benzisoxazolons, des p-Aminophenols oder der Ascorbinsäure (z.B. Ascorbylpalmitat), die beispielsweise in DE-A-28 09 716 beschrieben sind. Besonders günstige ED-Verbindungen sind Gegenstand von DE-A-30 06 268.

Beispiele geeigneter ED-Verbindungen sind im folgenden aufgeführt.

ED 1

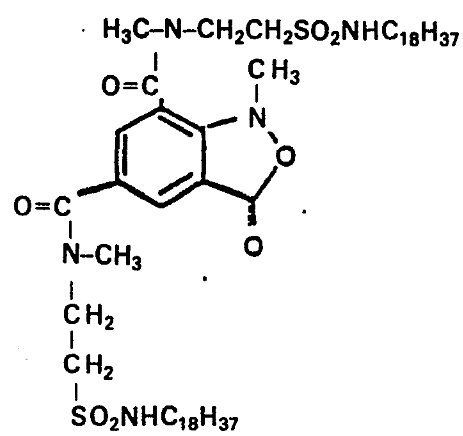

**ED 2**

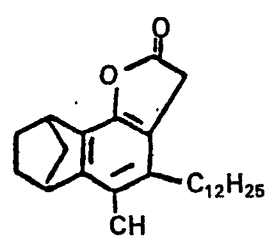

ED 3

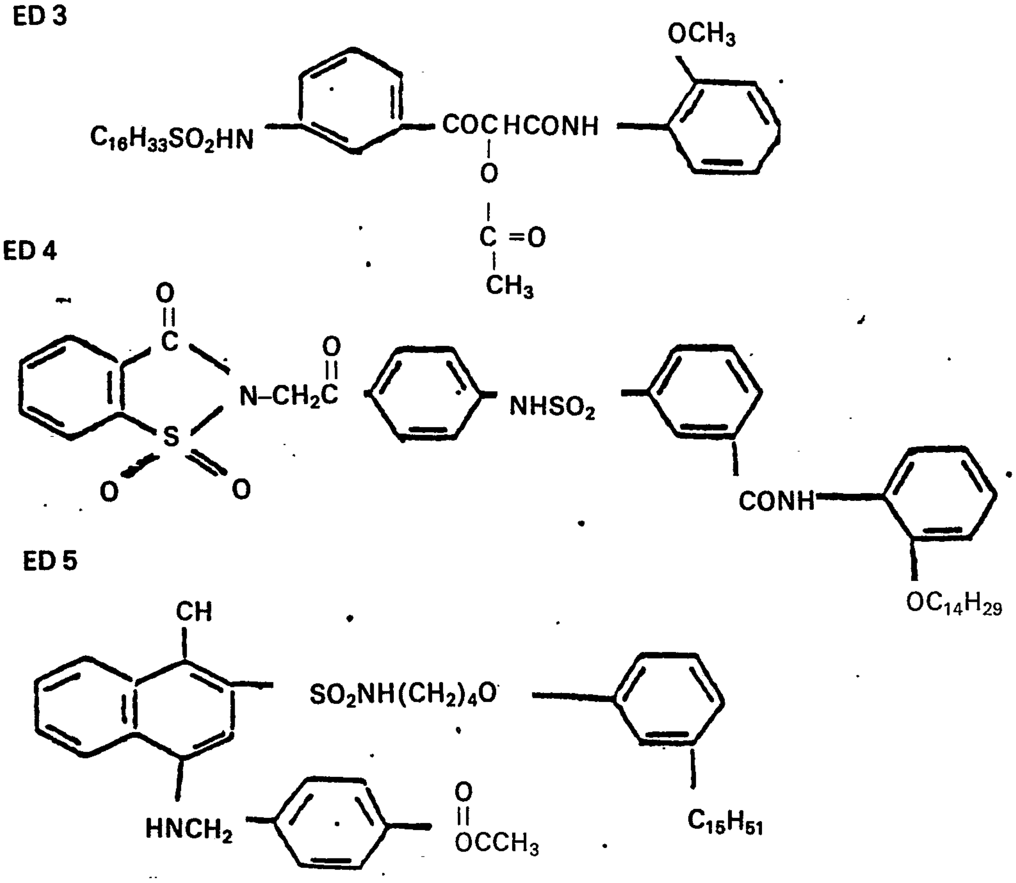

ED 4

ED 5

ED 6

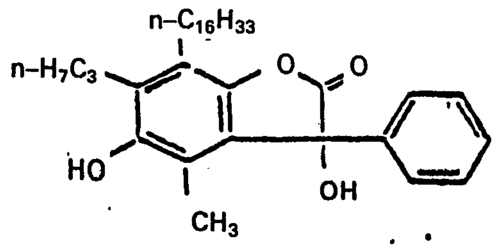

ED 7

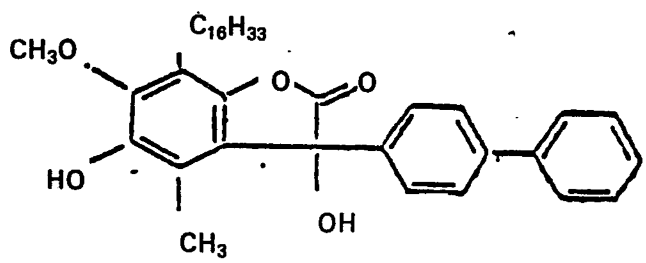

Beispiele für erfindungsgemässe, zu purpurnen Nickelkomplexen mit günstiger Absorption und hervorragender Lichtechtheit metallisierbare Monoazofarbstoffe der Formel I sind im folgenden aufgeführt:

Farbstoff 1

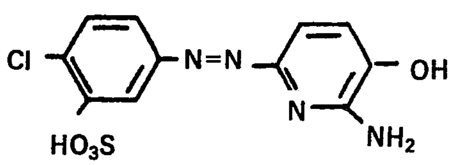

Farbstoff 2

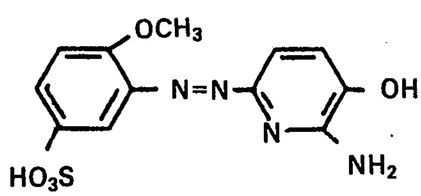

Farbstoff 3

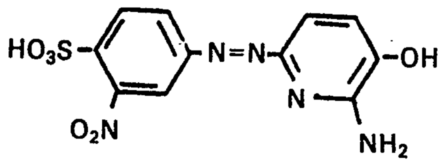

Farbstoff 4

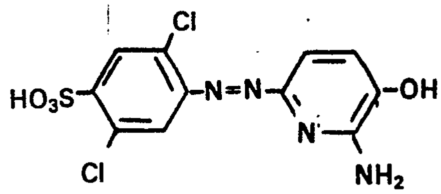

Farbstoff 5

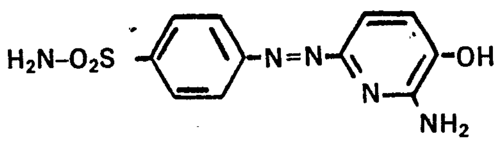

Farbstoff 6

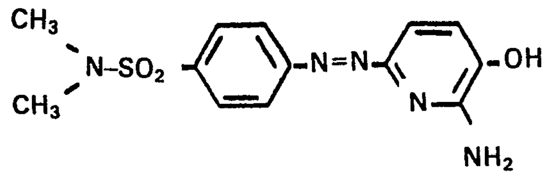

Farbstoff 7

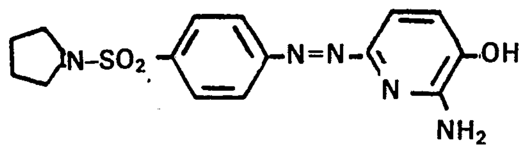

Farbstoff 8

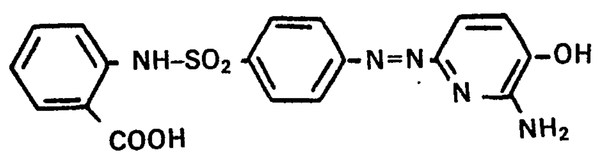

Farbstoff 9

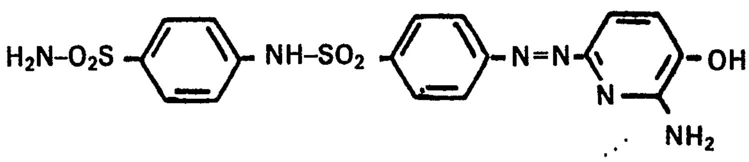

Farbstoff 10

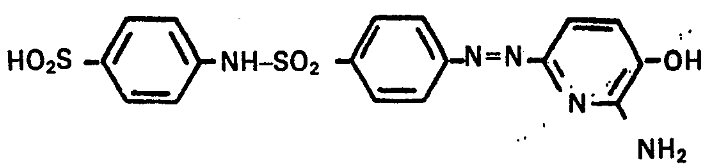

Farbstoff 11

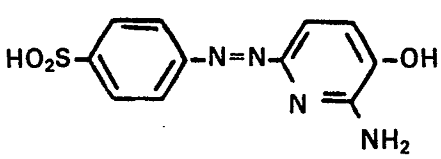

Farbstoff 12

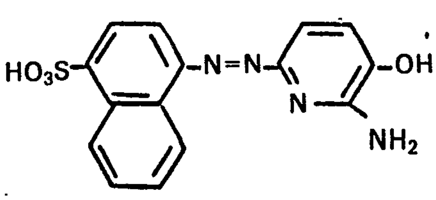

Farbstoff 13

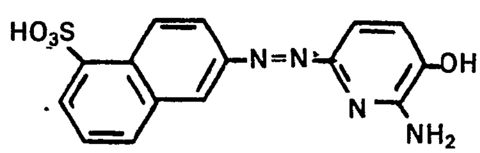

Farbstoff 14

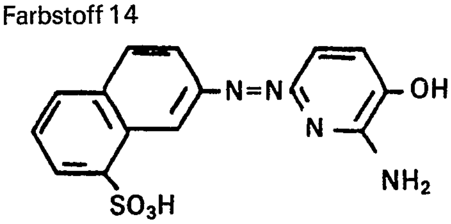

Farbstoff 15

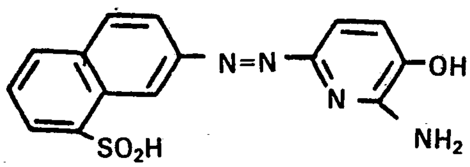

Farbstoff 16

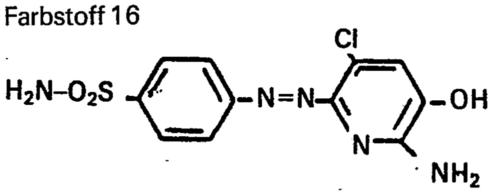

Farbstoff 17

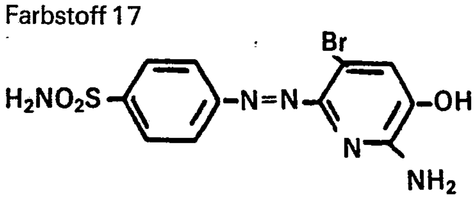

Farbstoff 18

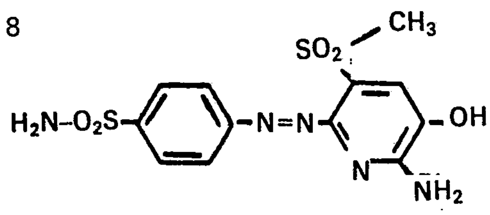

Farbstoff 19

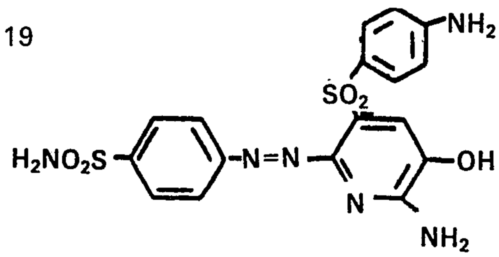

Farbstoff 20

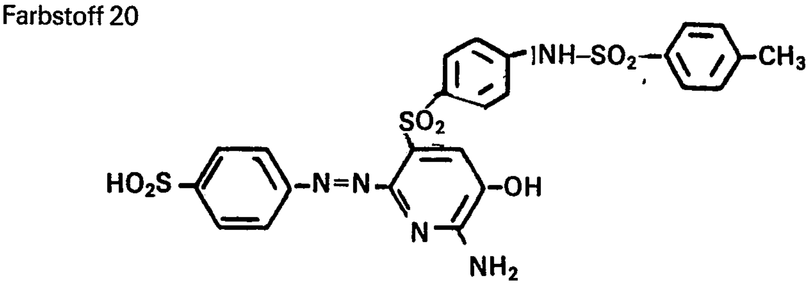

Farbstoff 21

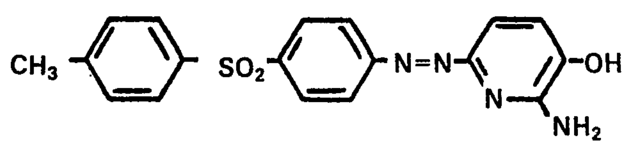

Farbstoff 22

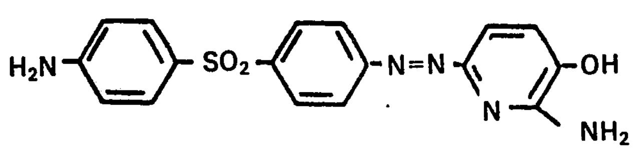

Farbstoff 23

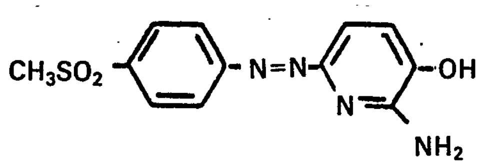

Farbstoff 24

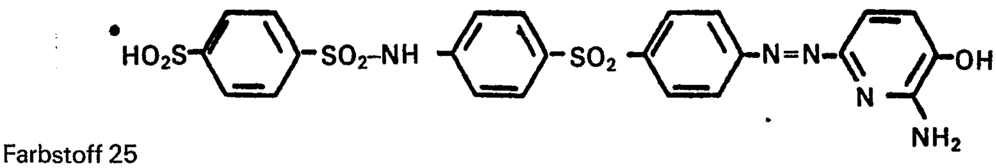

Farbstoff 25

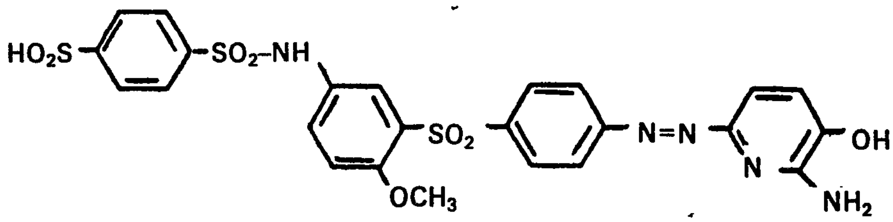

Farbstoff 26

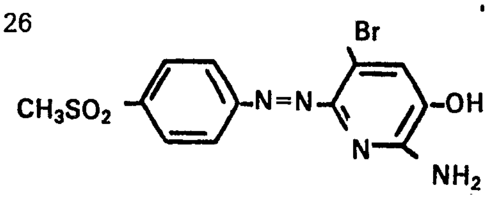

Farbstoff 27

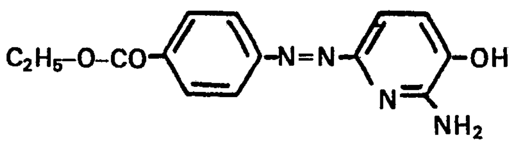

Farbstoff 28

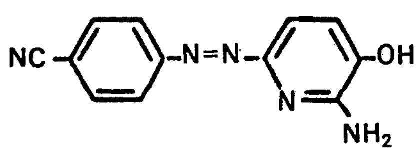

Farbstoff 29

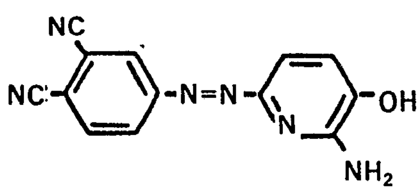

Farbstoff 30

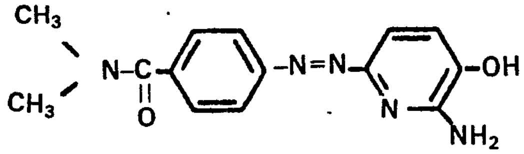

Farbstoff 31

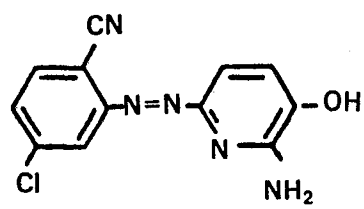

Die Herstellung der Farbstoffe erfolgt in an sich bekannter Weise durch Kupplung diazotierter Amine der Formel IV

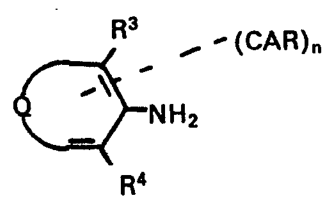

IV

im wässrigem, organischem oder wässrig-organischem Medium mit Kupplungskomponenten der Formel V

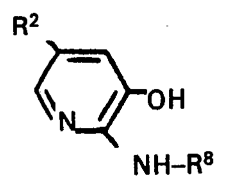

V

wobei in den Formeln IV und V die Reste Q, $R^2$, $R^3$, $R^4$ und CAR die bereits angegebene Bedeutung haben, $R^8$ Wasserstoff oder gegebenenfalls eine Acylschutzgruppe bedeutet und n für 0 oder 1 steht. Mit letzterem sowie durch die gestrichelte Linie wird zum Ausdruck gebracht, dass das Amin der Formel IV in diesem Stadium gegebenenfalls mit dem Rest CAR verbunden sein kann.

Steht $R^2$ für eine Sulfonylgruppe, dann erfolgt die Herstellung der Farbstoffe durch Kupplung des diazotierten Amins auf ein halogeniertes Aminopyridinol und anschliessende Umsetzung des rohen bzw. gereinigten Farbstoffes mit einem Alkyl- oder Arylsulfinat in aprotischem oder wässrig-aprotischem System. Die entsprechende Umsetzung ist in EP-A-0 063 808 ausführlich beschrieben.

$R^8$ stellt dann eine Acylschutzgruppe dar, die gegebenenfalls nach der Kupplung und einer Folgeumsetzung zum Austausch von Halogen gegen Sulfinat dazu benutzt werden kann, Amino- und OH-Gruppe gleichzeitig gegen Angriff durch acylierende oder sulfonylierende Reagentien, z.B. «Carrier-sulfochlorid», zu schützen und die Verknüpfung eindeutig in eine gewünschte Verknüpfungsposition zu lenken.

Geeignete Diazokomponenten sind Aniline, Anilinsulfonsäuren oder deren Derivate, Naphthylaminsulfonsäuren oder deren Derivate, weiterhin Anisidinsulfonsäuren und deren Derivate, chlorierte Anilinsulfonsäuren und deren Derivate, p-Aminophenylsulfone, Cyananiline.

Die Diazokomponenten dürfen jedoch keine Nitrogruppe in p-Stellung zur Aminogruppe enthalten.

Geeignete Kupplungskomponenten V sind:
2-Aminopyridinol-3
2-Amino-5-brompyridinol-3
2-Amino-5-chlorpyridinol-3
2-Acetaminopyridinol-3
2-Benzamidopyridinol-3
2-Benzolsulfonamidopyridinol-3
2-Acetamino-5-chlorpyridinol-3
2-Benzamido-5-brompyridinol-3
2-Phenoxycarbonylamido-5-brompyridinol-3.

Die Herstellung der erfindungsgemässen Farbstoffe wird nachstehend anhand eines repräsentativen Beispiels erläutert.

Farbstoff 5

Man diazotiert 1,72 g (0,01 mol) Sulfanilamid bei 0–5 °C in 20 ml Wasser und 3 ml 36%iger Salzsäure mit 0,7 g Natriumnitrit in 3 ml Wasser, rührt 30 min nach, zerstört den Nitritüberschuss mit Amidosulfonsäure und gibt die erhaltene Diazoniumsalzlösung in eine Lösung von 1,1 g 2-Aminopyridinol-3 (0,01 mol) und 4,2 g Kaliumcarbonat in 30 ml Wasser. Man hält über 2 h die Temperatur der Kupplungsbrühe auf 0–10 °C und saugt anschliessend den erhaltenen Farbstoff ab. Zur Reinigung wird das trockene Produkt mehrfach mit Aceton ausgekocht. Die acetonischen Lösungen enthalten einheitlichen Farbstoff und werden eingedampft.

Ausbeute: 1,6 g (55% der Theorie).

Die erfindungsgemässen Farbstoffe sind in der angegebenen Form unmittelbar einsetzbar, z.B. im Ink-Jet-Verfahren, zu welchem Zweck aus den genannten Farbstoffen in bekannter Weise wässrige oder nicht-wässrige farbige Tinten hergestellt werden. Um die Bildung der hochlichtechten und brillanten Farbstoff-Metall-Komplexe zu bewirken, kann beispielsweise ein Aufzeichnungsträger verwendet werden, der eine mit einem Salz des betreffenden Schwermetalls, im vorliegenden Fall bevorzugt Nickel, imprägnierte Schicht enthält. Zum Ink-Jet-Verfahren wird Bezug genommen auf einen entsprechenden Vortrag von R. Meyer und K. Hoffmann, Kongressband, 4. Internationaler Kongress für Reprographie und Information, 1975, Seiten 184–199.

Hinsichtlich des Farbdiffusionsübertragungsverfahrens handelt es sich bei den angegebenen Farbstoffen um diffusionsfähige Farbstoffe, die aus entsprechenden Farbabspaltern freigesetzt worden sind, oder um Modellfarbstoffe, die durch bekannte präparative Verfahren ohne störende Veränderung in Lichtechtheit und Absorption unter Bildung von Farbabspaltern mit abspaltbaren Trägerresten verknüpft werden können. Aus letzteren werden bei der Entwicklung bildmässig die erfindungsgemässen Farbstoffe freigesetzt.

Beispiele für erfindungsgemässe Farbabspalter sind im folgenden aufgeführt.

Farbabspalter 1

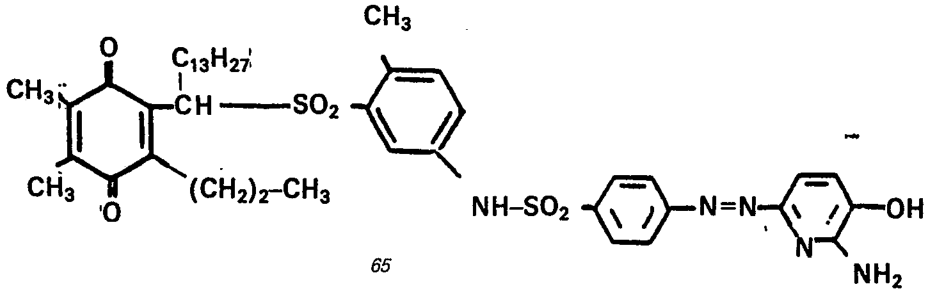

Farbabspalter 2

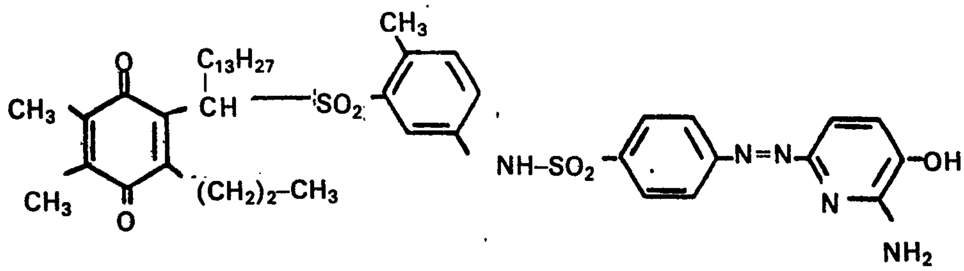

Farbabspalter 3

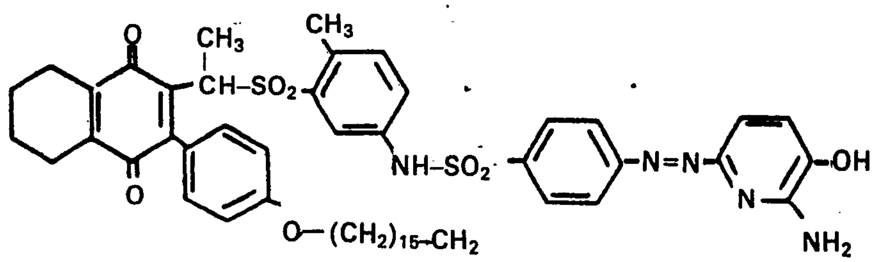

Farbabspalter 4

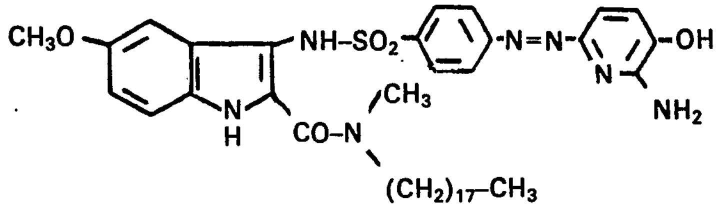

Farbabspalter 5

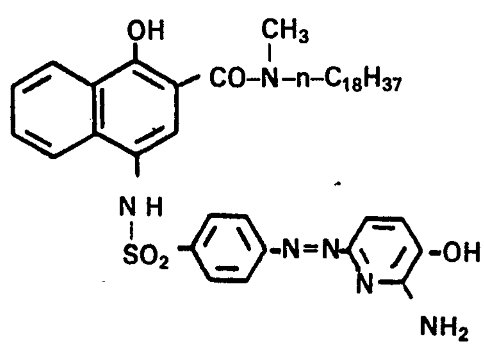

Farbabspalter 6

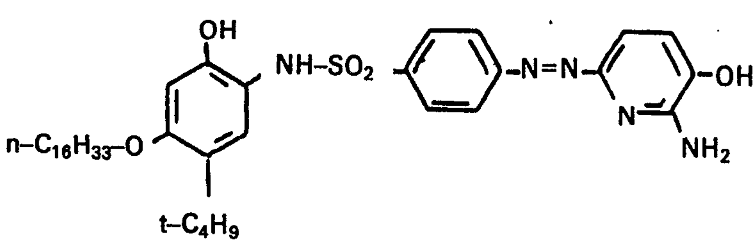

Farbabspalter 7

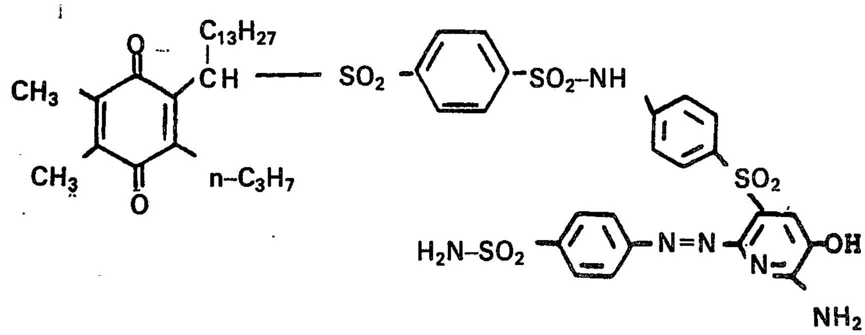

Die Herstellung der erfindungsgemässen Farbabspalter wird nachstehend anhand eines repräsentativen Beispieles erläutert.

Farbabspalter 1

Vorstufe 1.1.

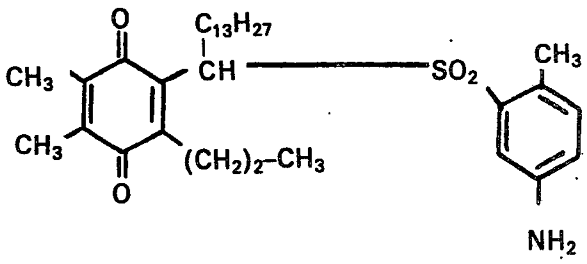

Die Herstellung ist in DE-A-31 07 540 auf den Seiten 51 und 52 beschrieben.

Vorstufe 1.2.

Zu 10,9 g Vorstufe 1.1. in 200 ml wasserfreiem Dichlormethan und 7 ml Pyridin werden 4,7 g 4-Acetaminobenzolsulfochlorid eingetragen. Man rührt 5 h bei Raumtemperatur nach, engt am Rotationsverdampfer ein und verrührt den Rückstand mit Wasser.

Man dekantiert die wässrige Phase ab und verrührt erneut mit 300 ml Methanol. Aus der zunächst gebildeten Lösung fällt die Vorstufe 1.2 nach einiger Zeit aus. Man saugt ab und trocknet an der Luft.

Ausbeute 13,5 g gelbliches Pulver (91% der Theorie).

Vorstufe 1.3.

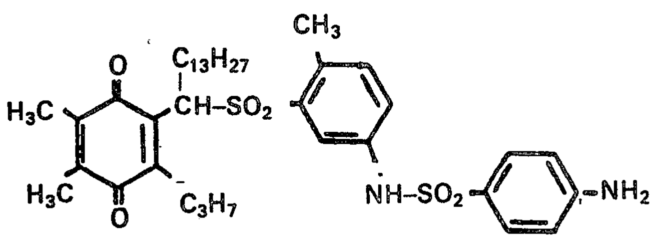

Man kocht Vorstufe 1.2. in 150 ml Ethanol mit 6 ml 36%iger Salzsäure über 30 min unter Rückfluss, engt am Rotationsverdampfer ein, dekantiert mit 150 ml Wasser, rührt 2 h nach, saugt ab, wäscht mit 100 ml Wasser nach und verrührt ohne Zwischentrocknung mit 50 ml Methanol. Anschliessend wird abgesaugt und an der Luft getrocknet.

Farbabspalter 1

7 g Vorstufe 1.3. (10 mmol) werden in 70 ml Aceton gelöst und nach Zugabe von 1,5 ml 96%iger Schwefelsäure bei −5 °C mit 1,8 ml 40%iger Nitrosylschwefelsäure diazotiert. Man rührt 60 min nach, gibt 0,1 g Harnstoff zu, rührt 10 min nach und trägt die erhaltene Lösung des Diazoniumsalzes in einer auf 0 °C gekühlte Mischung aus 1,1 g 2-Amino-pyridinol-3, 9 g Kaliumcarbonat, 50 ml Aceton und 5 ml Wasser ein.

Man rührt 4 h bei 0 °C nach und lässt über Nacht ausreagieren, wobei die Temperatur auf 20 °C ansteigt. Man trägt auf 500 ml Wasser aus, rührt 15 min nach, saugt ab, wäscht sorgfältig mit Wasser und trocknet.

Das Rohprodukt wird, in 30 ml Dichlormethan gelöst, auf eine Säule von 1000 g Silikagel/Woelm (32–63 µm) aufgebracht und mit Dichlormethan/Methanol unter Druck eluiert. Man erhält aus 7,1 g Rohprodukt 4,8 g Reinsubstanz (lt. Dünnschichtchromatographie auf Kieselgel 60 F 254/Merck mit Dichlormethan/Methanol 98:2 einheitlich).

Die erfindungsgemässen Farbabspalter werden beim Farbdiffusionsübertragungsverfahren in Zuordnung zu einer lichtempfindlichen Silberhalogenidemulsionsschicht einem farbfotografischen Aufzeichnungsmaterial einverleibt. Bei monochromatischen Verfahren erhält ein solches Aufzeichnungsmaterial mindestens eine, bei Verfahren zur Herstellung mehrfarbiger Bilder in der Regel mindestens drei lichtempfindliche Silberhalogenidemulsionsschichten, im letzteren Fall mit

unterschiedlicher spektraler Empfindlichkeit, wobei erfindungsgemäss mindestens einer dieser Schichten ein Farbabspalter gemäss Formel III zugeordnet ist. Das Farbabspalter liefern bei der Entwicklung diffusionsfähige Farbstoffe, die nach Diffusion in eine Bildempfangsschicht mit Nickelionen zu purpurnen Bildfarbstoffen komplexiert werden. Die Farbabspalter der Erfindung sind daher bevorzugt einer grünempfindlichen Silberhalogenidemulsionsschicht zugeordnet.

Unter «Zuordnung» und «zugeordnet» wird verstanden, dass die gegenseitige Anordnung von lichtempfindlicher Silberhalogenidemulsionsschicht und Farbabspalter von solcher Art ist, dass bei der Entwicklung eine Wechselwirkung zwischen ihnen möglich ist, die eine Freisetzung des diffusionsfähigen durch Nickelionen komplexierbaren Monoazofarbstoffes als Funktion der Entwicklung der Silberhalogenidemulsionsschicht zulässt. Hierzu müssen das lichtempfindliche Silberhalogenid und der Farbabspalter nicht notwendigerweise in derselben Schicht vorliegen; sie können auch in benachbarten Schichten untergebracht sein, die jeweils der gleichen Schichteinheit angehören.

Falls es sich bei den erfindungsgemässen Farbabspaltern um reduzierbare, reduktiv spaltbare Verbindungen handelt, die zweckmässig gemeinsam mit ED-Verbindungen (oder deren Vorläufern, z.B. gemäss DE-A-30 06 268) verwendet werden, ist unter Zuordnung zu verstehen, dass die gegenseitige Anordnung von Silberhalogenidemulsion, ED-Verbindung bzw. ED-Vorläuferverbindung und Farbabspalter von solcher Art ist, dass eine Wechselwirkung zwischen ihnen möglich ist, die eine bildmässige Übereinstimmung zwischen dem gebildeten Silberbild und dem Verbrauch an ED-Verbindung einerseits sowie zwischen der nicht verbrauchten ED-Verbindung und dem Farbabspalter andererseits zulässt, so dass in Übereinstimmung mit dem nicht entwickelten Silberhalogenid eine bildweise Verteilung von diffusionsfähigem Farbstoff erzeugt wird.

Obwohl für die Einarbeitung der erfindungsgemässen Farbabspalter die verschiedensten Methoden in Frage kommen, hat es sich als günstig erwiesen, die Farbabspalter der vorliegenden Erfindung in Form von Emulgaten unter Verwendung von sogenannten Ölbildnern in die Schichten einzuverleiben. Insbesondere bei Verwendung von reduzierbaren, reduktiv spaltbaren Farbabspaltern in Kombination mit ED-Verbindungen bietet dies den Vorteil, dass Farbabspalter und ED-Verbindungen in Form eines gemeinsamen Emulgates in besonders engen funktionellen Kontakt gebracht werden können. Geeignete Ölbildner sind beispielsweise beschrieben in US-A-2 322 027, DE-A-1 772 192, DE-A-2 042 659 und DE-A-2 049 689. Die optimalen Mengen des einzuarbeitenden Farbabspalters und gegebenenfalls der ED-Verbindung können durch einfache routinemässige Tests ermittelt werden. Der Farbabspalter der vorliegenden Erfindung wird beispielsweise in Mengen von 0,05–0,2 mol und die ED-Verbindung, falls vorhanden, in Mengen von 0,1–0,6 mol pro mol Silberhalogenid verwendet.

Die Entwicklung des bildmässig belichteten erfindungsgemässen farbfotografischen Aufzeichnungsmaterials wird durch Behandlung mit einer wässrig-alkalischen, gegebenenfalls hochviskosen Entwicklerlösung eingeleitet. Die für die Entwicklung erforderlichen Hilfsentwicklerverbindungen sind entweder in der Entwicklerlösung enthalten oder können ganz oder teilweise auch in einer oder mehreren Schichten des erfindungsgemässen farbfotografischen Aufzeichnungsmaterials enthalten sein. Bei der Entwicklung werden aus den Farbabspaltern bildmässig diffusionsfähige Farbstoffe freigesetzt und auf eine Bildempfangsschicht übertragen, die entweder integraler Bestandteil des erfindungsgemässen farbfotografischen Aufzeichnungsmaterials ist oder sich mit jenem zumindest während der Entwicklungszeit in Kontakt befindet. Die Bildempfangsschicht kann demnach auf dem gleichen Schichtträger angeordnet sein wie das lichtempfindliche Element oder auf einem separaten Schichtträger. Sie besteht im wesentlichen aus einem Bindemittel, das Beizmittel für die Festlegung der aus den nicht-diffundierenden Farbabspaltern freigesetzten diffusionsfähigen Farbstoffe enthält. Als Beizmittel für anionische Farbstoffe dienen vorzugsweise langkettige quaternäre Ammonium- oder Phosphoniumverbindungen, z.B. solche, wie sie beschrieben sind in US-A-3 271 147 und US-A-3 271 148. Ferner können auch bestimmte Metallsalze und deren Hydroxide, die mit den sauren Farbstoffen schwerlösliche Verbindungen bilden, verwandt werden. Weiterhin sind hier auch polymere Beizmittel zu erwähnen, wie etwa solche, die in DE-A-23 15 304, DE-A-26 31 521 oder DE-A-29 41 818 beschrieben sind. Die Farbstoffbeizmittel sind in der Beizmittelschicht in einem der üblichen hydrophilen Bindemittel dispergiert, z.B. in Gelatine, Polyvinylpyrrolidon, ganz oder partiell hydrolysierten Celluloseestern. Selbstverständlich können auch manche Bindemittel als Beizmittel fungieren, z.B. Polymerisate von stickstoffhaltigen quaternären Basen, wie etwa von 2-Methyl-4-Vinylpyridin, 4-Vinylpyridin, 1-Vinylimidazol, wie beispielsweise beschrieben in US-A-2 484 430. Weitere brauchbare beizende Bindemittel sind beispielsweise Guanylhydrazonderivate von Alkylvinylketonpolymerisaten, wie beispielsweise beschrieben in der US-A-2 882 156, oder Guanylhydrazonderivate von Acylstyrol-polymerisaten, wie beispielsweise beschrieben in DE-A-20 09 498. Im allgemeinen wird man jedoch den zuletzt genannten beizenden Bindemitteln andere Bindemittel, z.B. Gelatine, zusetzen.

Darüber hinaus kann im vorliegenden Fall die Bildempfangsschicht oder eine hierzu benachbarte Schicht Schwermetallionen, insbesondere Nickelionen enthalten, die mit den eindiffundierenden Monoazofarbstoffen der Erfindung die entsprechenden Azofarbstoff-Metall-Bidentat-Komplexe bilden mit den erwähnten vorteilhaften

Eigenschaften hinsichtlich Absorption und Stabilität. Die Nickelionen können in der Bildempfangsschicht in komplex gebundener Form vorliegen, z.B. gebunden an bestimmte Polymerisate wie etwa beschrieben in Research Disclosure 18 534 (Sept. 1979) oder in DE-A-30 02 287 und DE-A-31 05 777. Es ist aber auch möglich die Azofarbstoff-Metall-Komplexe nach erfolgter Diffusion in der Bildempfangsschicht dadurch zu erzeugen, dass die Bildempfangsschicht mit der darin entstandenen bildmässigen Verteilung an erfindungsgemässen Farbstoffen mit einer Lösung eines Salzes eines der genannten Schwermetalle behandelt wird. Auch die bei der Entwicklung in Zuordnung zu den ursprünglich lichtempfindlichen Schichten bildmässig (als Negativ zu dem Übertragsbild) zurückbleibenden Farbabspalter können durch Behandlung mit Nickelionen in die entsprechenden Azofarbstoff-Metall-Komplexe überführt werden («retained image»). In jedem Fall besteht das mit dem erfindungsgemässen farbfotografischen Material erzeugte Farbbild aus einer bildmässigen Verteilung von Nickelkomplexen, der erfindungsgemässen Farbabspalter oder der daraus freigesetzten Azofarbstoffe sowie gegebenenfalls weiterer Farbstoffe, die im letzteren Fall in der Bildempfangsschicht mittels der darin enthaltenen Beizmittel festgelegt sind.

Sofern die Bildempfangsschicht auch nach vollendeter Entwicklung in Schichtkontakt mit dem lichtempfindlichen Element verbleibt, befindet sich zwischen ihnen in der Regel eine alkalidurchlässige pigmenthaltige lichtreflektierende Bindemittelschicht, die der optischen Trennung zwischen Negativ und Positiv und als ästhetisch ansprechender Bildhintergrund für das übertragene Farbbild dient. Eine solche lichtreflektierende Schicht kann in bekannter Weise bereits in dem lichtempfindlichen farbfotografischen Aufzeichnungsmaterial vorgebildet sein oder aber in ebenfalls bekannter Weise erst bei der Entwicklung erzeugt werden. Falls die Bildempfangsschicht zwischen Schichtträger und lichtempfindlichem Element angeordnet ist und von letzterem durch eine vorgebildete lichtreflektierende Schicht getrennt ist, muss entweder der Schichtträger transparent sein, so dass das erzeugte Farbübertragsbild durch ihn hindurch betrachtet werden kann, oder das lichtempfindliche Element muss mitsamt der lichtreflektierenden Schicht von der Bildempfangsschicht entfernt werden, um letztere freizulegen. Die Bildempfangsschicht kann aber auch als oberste Schicht in einem integralen farbfotografischen Aufzeichnungsmaterial vorhanden sein, in welch letzterem Fall die Belichtung zweckmässigerweise durch den transparenten Schichtträger vorgenommen wird.

Beispiel 1

Bildempfangsblatt 1

Auf einen beidseitig mit Polyethylen beschichteten Papierträger wurden folgende Schichten aufgetragen. Alle Angaben beziehen sich auf 1 $m^2$.

1) Beizmittelschicht, enthaltend 6 g kationisches Polyurethan gemäss Beispiel 3 der DE-A 26 31 521 und 5 g Gelatine.

2) Härtungsschicht, enthaltend 0,1 g Gelatine und 0,15 g Soforthärtungsmittel der Struktur

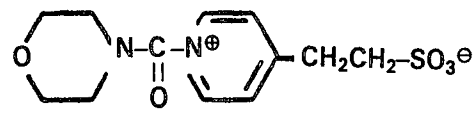

Je 2 Streifen des enthaltenen Bildempfangsmaterials wurden in 0,03 molare, mit 2% Natronlauge alkalisch gestellte Lösungen der Farbstoffe A, B, C und D (Vergleichsfarbstoffe nach US-A-4 207 104 sowie Research Disclosure 17 334 (September 1978)) und der erfindungsgemässen Farbstoffe 1, 2, 3, 4, 5 und 10 eingetaucht, bis die getrocknete Schicht eine Dichte von mindestens 1,0 gemessen hinter Blaufilter, aufwies.

Vergleichsfarbstoffe:

A:

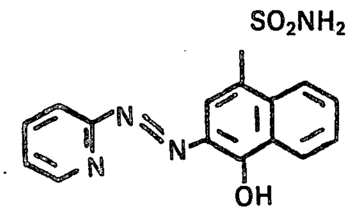

B:

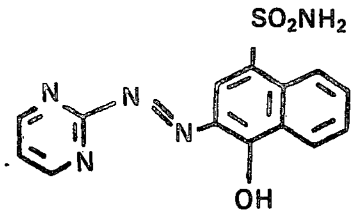

C:

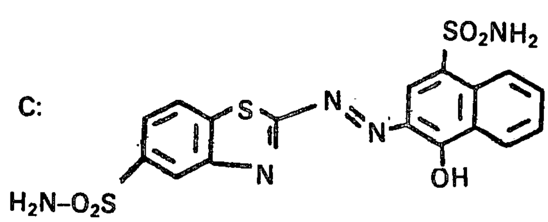

D:

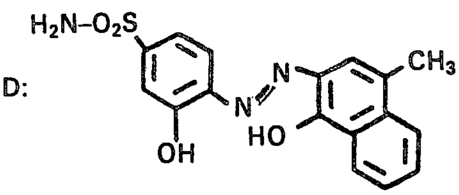

Anschliessend wurden die Streifen durch Eintauchen in 2%ige Nickelacetatlösung über 30 sec metallisiert, mit Wasser abgespült und getrocknet.

Jeweils die Hälfte der Streifen wurde einer Hochintensitätsbelichtung im Xenotestgerät ausgesetzt, die Strahlungsdosis betrug $4{,}8 \cdot 10^6$ Luxstunden (lx.h.)

Die Eigenschaften (Absorptionsmaximum und Halbbandbreite in nm, Dichteanstieg bei Metallisierung (gemessen hinter Grünfilter) in %, die hinter Blau- und Rotfilter gemessenen Nebendichten und der bei Hochintensitätsbelichtung gemessene relative Dichteverlust in %) der mit den einzelnen Farbstoffen erzielten, mit Nickel nachmetallisierten Farbüberträge werden im folgenden tabellarisch dargestellt.

Wie aus dem Vergleich der metallisierten Farbüberträge zu erkennen ist, verliert keiner der erfindungsgemässen Farbstoffe über 48 h in Xenotestgerät mehr als 9% Dichte während die Hetarylazonaphthole gemäss US-A-4 207 104 zwischen 23 und 48% Dichteverlust erleiden.

Tabelle 1
Ni-metallisierte Farbstoffe

| Farbstoff | λ max [nm] | Halbbandbreite | Nebendichten hinter Blaufilter | Nebendichten hinter Rotfilter | rel. Dichteänderung im Xenontest |
|---|---|---|---|---|---|
| A | 534+570 | 470–600 | 38% | 20% | −23% |
| B | 534+570 | 465–600 | 41% | 22% | −48% |
| C | 547 | 469–628 | 47% | 53% | −37% |
| D | – | – | – | – | −12% |
| 1 | 515 | 450–569 | 74% | 6% | − 4% |
| 2 | 560 | 439–612 | 66% | 45% | − 5% |
| 3 | 520 | 464–579 | 56% | 23% | ± 0% |
| 4 | 520 | 460–581 | 60% | 28% | − 9% |
| 5 | 530 | 461–573 | 55% | 23% | ± 0% |
| 10 | 538 | 464–584 | 35% | 15% | ± 0% |

Beispiel 2

Lichtempfindliches Element 1 (nicht erfindungsgemäss)

Auf einen beidseitig mit Polyethylen beschichteten Papierträger wurden nacheinander folgende Schichten aufgetragen. Alle Angaben beziehen sich auf 1 $m^2$.

1. Eine grün-sensibilisierte Silberbromidiodidemulsionsschicht aus 0,6 g $AgNO_3$ mit 0,18 g des nicht erfindungsgemässen Farbabspalters E, 0,13 g ED-Verbindung ED 6 (= Verbindung 4 der DE-A-30 06 268), 0,40 g Palmitinsäurediethylamid und 0,92 g Gelatine.

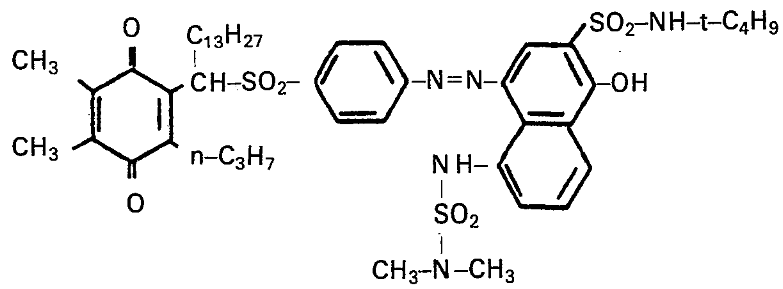

Farbabspalter E

2. Eine Schutzschicht mit 0,6 g Monoacetylierungsprodukt von 4-Methyl-4-hydroxymethylphenidon, 0,12 g 2-Isooctadecyl-5-sulfohydrochinon und 0,6 g Gelatine.

3. Eine Härtungsschicht mit 0,1 g Gelatine und 0,12 g Soforthärtungsmittel der Formel

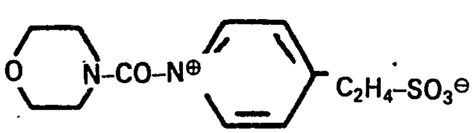

Das bildmässig durch einen Stufenkeil belichtete lichtempfindliche Element 1 und ein Bildempfangsblatt wie in Beispiel 1 beschrieben wurden mit einer Behandlungslösung der nachfolgend angegebenen Zusammensetzung getränkt und schichtseitig zusammengepresst:

925 g $H_2O$
30 g Isobutanol
2 g $Na_2SO_3$
3 g KBr
40 g KOH

Nach einer Kontaktzeit von 2 min wurden die Blätter voneinander getrennt und das Bildempfangsblatt 30 s gewässert. Nach der Trocknung wurden die Dmin/Dmax-Werte des positiven purpurnen Farbbildes gemessen (Farbbild 1).

Lichtempfindliches Element 2 (erfindungsgemäss)

Das lichtempfindliche Element 2 unterscheidet sich von dem lichtempfindlichen Element 1 insofern, als Schicht 1 folgende Zusammensetzung hat:

1. Eine grün-sensibilisierte Silberbromidiodidemulsion aus 0,8 g $AgNO_3$ mit 0,33 g Farbabspalter 1, 0,27 g ED-Verbindung ED 6, 0,6 g Palmitinsäurediethylamid und 1,6 g Gelatine.

Die Verarbeitung erfolgt analog der des lichtempfindlichen Elements 1. Nach dem Trennen wurde mit demineralisiertem Wasser kurz gespült, durch Eintauchen in 2%ige Nickel-II-acetatlösung metallisiert, erneut abgespült und getrocknet.

Die aus den lichtempfindlichen Elementen 1 und 2 erhaltenen Ergebnisse (Farbbild 1 und 2) werden nachstehend verglichen:

| Farbbild | Farbabspalter | $D_{min}$ | $D_{max}$ | E | $\frac{\Delta D}{Do}$ |
|---|---|---|---|---|---|
| 1 | E | 0,11 | 1,80 | 100 | −49% |
| 2 | 1 | 0,14 | 1,86 | 60 | − 6% |

In der 5. Spalte ist die Empfindlichkeit E in relativen log I.t-Einheiten angegeben.

In der 6. Spalte ist die prozentuale Dichteabnahme bei Bestrahlung mit Xenonlicht ($7{,}2\cdot10^6$ lx.h) angegeben.

Man erhält aus dem lichtempfindlichen Element 2 ein purpurnes Farbbild mit einer Fotostabilität, die gegenüber konventionellen purpurnen Monoazofarbstoffen um mindestens den Faktor 7 verbessert ist.

**Patentansprüche**

1. Monoazofarbstoffe der Formel

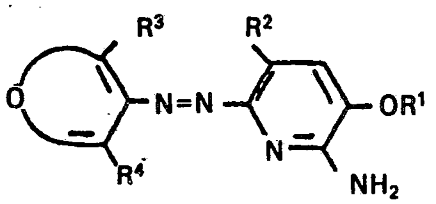

I

und deren Metallkomplexe,
worin bedeuten

Q den zur Vervollständigung einer Phenyl- oder Naphthylgruppe erforderlichen Rest;

$R^1$ H;

$R^2$ H, Halogen oder eine Alkyl- oder Arylsulfonylgruppe; und

$R^3$ und $R^4$ (gleich oder verschieden) H oder einen nicht zur Chelatbildung befähigten Substituenten.

2. Nickelkomplexe von Monoazofarbstoffen der Formel

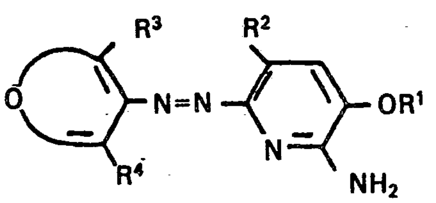

worin bedeuten

Q den zur Vervollständigung einer Phenyl- oder Naphthylgruppe erforderlichen Rest;

$R^1$ H;

$R^2$ H, Halogen oder eine Alkyl- oder Arylsulfonylgruppe; und

$R^3$ und $R^4$ (gleich oder verschieden) H oder einen nicht zur Chelatbildung befähigten Substituenten.

3. Monoazofarbstoffe der Formel

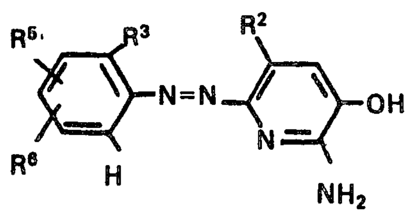

II

worin bedeuten

$R^2$ H, Halogen oder eine Alkyl- oder Arylsulfonylgruppe;

$R^3$ H, Halogen, Alkyl, Alkoxy, $-CN$, $-CF_3$, oder Carbamoyl oder zusammen mit $R^5$ einen Rest zur Vervollständigung eines ankondensierten Benzolringes; und

$R^5$ und $R^6$ (gleich oder verschieden) H, Halogen, $-CN$, Carbalkoxy, Carbamoyl, Sulfinsäure (Sulfinyl), Sulfonsäure (Sulfonat), Sulfamoyl, Alkyl- oder Arylsulfonyl oder (in m-Stellung zur Azogruppe) $-NO_2$ oder $R^5$ bedeutet zusammen mit $R^3$ oder $R^6$ einen Rest zur Vervollständigung eines ankondensierten Benzolringes.

4. Verwendung von Azofarbstoffen gemäss Anspruch 1 zur Erzeugung von lichtstabilen purpurnen Bildern.

5. Farbfotografisches Aufzeichnungsmaterial für die Herstellung farbiger Bilder nach dem Farbdiffusionsübertragungsverfahren, das zugeordnet

zu mindestens einer lichtempfindlichen Silberhalogenidemulsionsschicht eine nicht diffundierende farbgebende Verbindung enthält, aus der unter den Bedingungen der alkalischen Entwicklung als Funktion der Entwicklung der Silberhalogenidemulsionsschicht ein diffusionsfähiger durch Metallionen komplexierbarer Monoazofarbstoff freigesetzt wird, dadurch gekennzeichnet, dass der Monoazofarbstoff der folgenden Formel I entspricht:

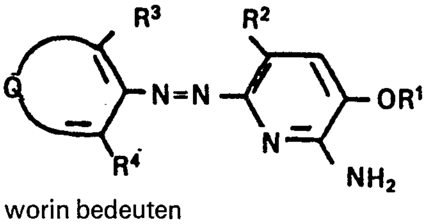
I

worin bedeuten

Q den zur Vervollständigung einer Phenyl- oder Naphthylgruppe erforderlichen Rest;

$R^1$ H;

$R^2$ H, Halogen oder eine Alkyl- oder Arylsulfonylgruppe; und

$R^3$ und $R^4$ (gleich oder verschieden) H oder einen nicht zur Chelatbildung befähigten Substituenten.

6. Aufzeichnungsmaterial nach Anspruch 5, dadurch gekennzeichnet, dass der Monoazofarbstoff der folgenden Formel II entspricht:

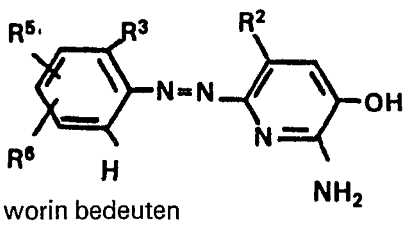
II

worin bedeuten

$R^2$ H, Halogen oder eine Alkyl- oder Arylsulfonylgruppe;

$R^3$ H, Halogen, Alkyl, Alkoxy, $-CN$, $-CF_3$, oder Carbamoyl oder zusammen mit $R^5$ einen Rest zur Vervollständigung eines ankondensierten Benzolringes; und

$R^5$ und $R^6$ (gleich oder verschieden) H, Halogen, $-CN$, Carbalkoxy, Carbamoyl, Sulfinsäure (Sulfinyl), Sulfonsäure (Sulfonat), Sulfamoyl, Alkyl- oder Arylsulfonyl oder (in m-Stellung zur Azogruppe) $-NO_2$ oder $R^5$ bedeutet zusammen mit $R^3$ oder $R^6$ einen Rest zur Vervollständigung eines ankondensierten Benzolringes.

7. Farbbild, bestehend aus einer auf einem Schichtträger angeordneten bildmässigen Verteilung eines purpurnen Farbstoffes, dadurch gekennzeichnet, dass der purpurne Farbstoff ein Nickelkomplex eines Monoazofarbstoffes der Formel I ist

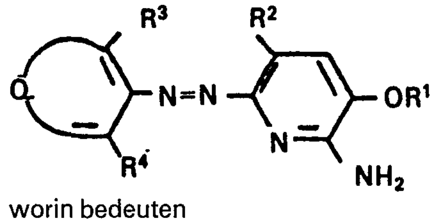
I

worin bedeuten

Q den zur Vervollständigung einer Phenyl- oder Naphthylgruppe erforderlichen Rest;

$R^1$ H;

$R^2$ H, Halogen oder eine Alkyl- oder Arylsulfonylgruppe; und

$R^3$ und $R^4$ (gleich oder verschieden) H oder einen nicht zur Chelatbildung befähigten Substituenten.

8. Farbbild nach Anspruch 7, dadurch gekennzeichnet, dass der purpurne Farbstoff ein Nickelkomplex eines Monoazofarbstoffes der folgenden Formel II ist:

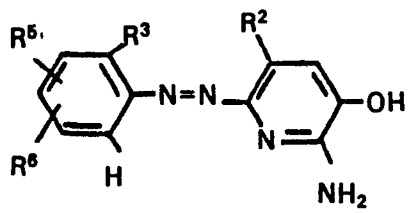
II

worin bedeuten

$R^2$ H, Halogen oder eine Alkyl- oder Arylsulfonylgruppe;

$R^3$ H, Halogen, Alkyl, Alkoxy, $-CN$, $-CF_3$, oder Carbamoyl oder zusammen mit $R^5$ einen Rest zur Vervollständigung eines ankondensierten Benzolringes; und

$R^5$ und $R^6$ (gleich oder verschieden) H, Halogen, $-CN$, Carbalkoxy, Carbamoyl, Sulfinsäure (Sulfinyl), Sulfansäure (Sulfonat), Sulfamoyl, Alkyl- oder Arylsulfonyl oder (in m-Stellung zur Azogruppe), $-NO_2$ oder $R^5$ bedeutet zusammen mit $R^3$ oder $R^6$ einen Rest zur Vervollständigung eines ankondensierten Benzolringes.

**Revendications**

1. Colorants monoazoïques de formule:

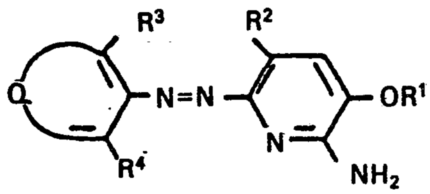

I

et leurs complexes métalliques, formule dans laquelle:

Q représente le radical nécessaire pour compléter un groupe phényle ou un groupe naphthyle;

$R^1$ représente H;

$R^2$ représente H, un atome d'halogène, un groupe alkylsulfonyle ou un groupe aryl-sulfonyle; et

$R^3$ et $R^4$ (identiques ou différents) représentent chacun H ou un substituant qui n'est pas apte à la formation de chélates.

2. Complexes de nickel de colorants monoazoïques de formule:

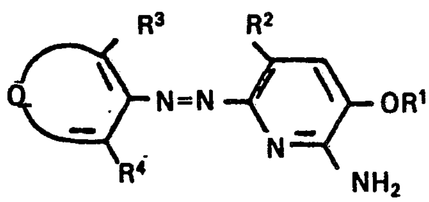

dans laquelle

Q représente le radical nécessaire pour compléter un groupe phényle ou un groupe naphthyle;

$R^1$ représente H;

$R^2$ représente H, un atome d'halogène, un groupe alkylsulfonyle ou un groupe aryl-sulfonyle; et

$R^3$ et $R^4$ (identiques ou différents) représentent chacun H ou un substituant qui n'est pas apte à la formation de chélates.

3. Colorants monoazoïques de formule:

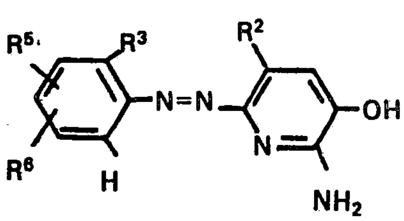

II

dans laquelle

$R^2$ représente H, un atome d'halogène, un groupe alkyl-sulfonyle ou un groupe aryl-sulfonyle;

$R^3$ représente H, un atome d'halogène, un groupe alkyle, un groupe alcoxy, $-CN$, $-CF_3$ ou un groupe carbamoyle ou encore, ensemble avec $R^5$, il représente un radical destiné à compléter un noyau benzène condensé; et

$R^5$ et $R^6$ (identiques ou différents) représentent chacun H, un atome d'halogène, $-CN$, un groupe carbalcoxy, un groupe carbamoyle, l'acide sulfinique (sulfinyle), l'acide sulfonique (sulfonate), un groupe sulfamoyle, un groupe alkyl-sulfonyle, un groupe arylsulfonyle ou (en position m par rapport au groupe azo) $-NO_2$ ou encore $R^5$, ensemble avec $R^3$ ou $R^6$, représente un radical destiné à compléter un noyau benzène condensé.

4. Utilisation de colorants azoïques selon la revendication 1 pour la formation d'images magenta stables à la lumière.

5. Matériau d'enregistrement de photographie en couleurs pour la formation d'images en couleurs selon le procédé de transfert par diffusion de colorants, matériau qui, en attribution à au moins une couche d'émulsion photosensible à l'halogénure d'argent, contient un composé chromogène non diffusible duquel, dans les conditions du développement alcalin et en fonction du développement de la couche d'émulsion à l'halogénure d'argent, un colorant monoazoïque diffusible et pouvant être complexé par des ions métalliques, est libéré, caractérisé en ce que le colorant monoazoïque répond à la formule I ci-après:

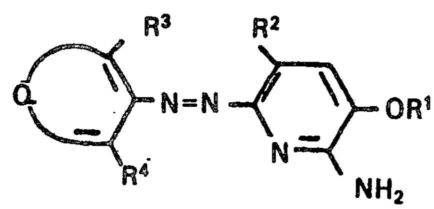

I

dans laquelle

Q représente le radical nécessaire pour compléter un groupe phényle ou un groupe naphthyle;

$R^1$ représente H;

$R^2$ représente H, un atome d'halogène, un groupe alkyl-sulfonyle ou un groupe aryl-sulfonyle; et

$R^3$ et $R^4$ (identiques ou différents) représentent chacun H ou un substituant qui n'est pas apte à la formation de chélates.

6. Matériau d'enregistrement selon la revendication 5, caractérisé en ce que le colorant monoazoïque repond à la formule II ci-après:

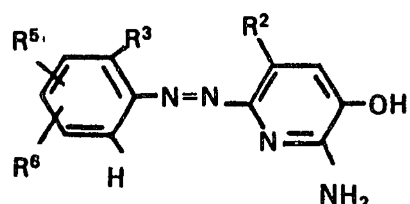

dans laquelle

$R^2$ représente H, un atome d'halogène, un groupe alkyl-sulfonyl ou un groupe aryl-sulfonyle;

$R^3$ représente H, un atome d'halogène, un groupe alkyle, un groupe alcoxy, $-CN$, $-CF_3$ ou un groupe carbamoyle ou, ensemble avec $R^5$, il représente un radical destiné à compléter un noyau benzène condensé; et

$R^5$ et $R^6$ (identiques ou différents) représentent chacun H, un atome d'halogène, $-CN$, un groupe carbalcoxy, un groupe carbamoyle, l'acide sulfinique (sulfinyle), l'acide sulfonique (sulfonate), un groupe sulfamoyle, un grpe alkyl-sulfonyle, un

groupe aryl-sulfonyle ou (en position m par rapport au groupe azo) $-NO_2$ ou $R^5$, ensemble avec $R^3$ ou $R^6$, représente un radical destiné à compléter un noyau benzène condensé.

7. Image en couleurs constituée d'une répartition d'un colorant magenta sous forme d'une image, cette répartition étant disposée sur un support de couche, caractérisée en ce que le colorant magenta est un complexe de nickel d'un colorant monoazoïque de formule I:

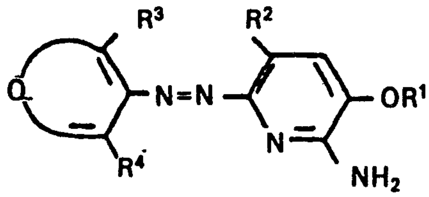

I

dans laquelle

Q représente le radical nécessaire pour compléter un groupe phényle ou un groupe naphthyle;

$R^1$ représente H;

$R^2$ représente H, un atome d'halogène, un groupe alkyl-sulfonyl ou un groupe aryl-sulfonyle; et

$R^3$ et $R^4$ (identiques ou différents) représentent chacun H ou un substituant qui n'est pas apte à la formation de chélates.

8. Image en couleurs selon la revendication 7, caractérisée en ce que le colorant magenta est un complexe du nickel d'un colorant monoazoïque répondant à la formule II ci-après:

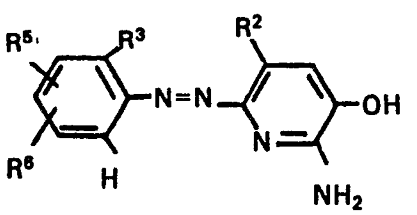

II

dans laquelle

$R^2$ représente H, un atome d'halogène, un groupe alkyl-sulfonyle ou un groupe aryl-sulfonyle;

$R^3$ représente H, un atome d'halogène, un groupe alkyle, un groupe alcoxy, $-CN$, $-CF_3$ ou un groupe carbamoyle ou, ensemble avec $R^5$, il représente un radical destiné à compléter un noyau benzène condensé; et

$R^5$ et $R^6$ (identiques ou différents) représentent chacun H, un atome d'halogène, $-CN$, un groupe carbalcoxy, un groupe carbamoyle, l'acide sulfinique (sulfinyle), l'acide sulfonique (sulfonate), un groupe sulfamoyle, un groupe alkyl-sulfonyle, un groupe aryl-sulfonyle ou (en position m par rapport au groupe azo) $-NO_2$ ou $R^5$, ensemble avec $R^3$ ou $R^6$, représente un radical destiné à compléter un noyau benzène condensé.

**Claims**

1. Monoazo dyes of the formula

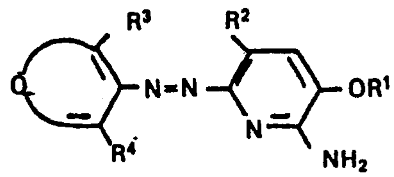

I

and metal complexes thereof

wherein

Q denotes the radical required for completing a phenyl or naphthyl group;

$R^1$ denotes H;

$R^2$ denotes H, halogen or an alkyl- or arylsulphonyl group; and

$R^3$ and $R^4$ (identical or different) denote H or a substituent not capable of chelate formation.

2. Nickel complexes of monoazo dyes of the formula

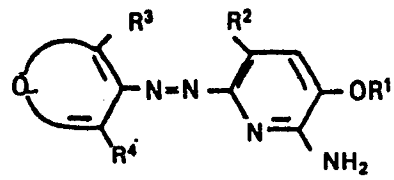

wherein

Q denotes the radical required for completing a phenyl or naphthyl group;

$R^1$ denotes H;

$R^2$ denotes H, halogen or an alkyl- or arylsulphonyl groupe; and

$R^3$ and $R^4$ (identical or different) denote H or a substituent not capable of chelate formation.

3. Monoazo dyes of the formula

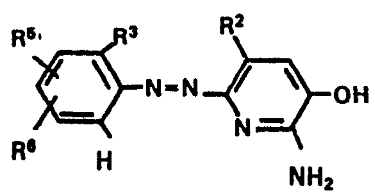

wherein

$R^2$ denotes H, halogen or an alkyl- or arylsulphonyl groupe;

$R^3$ denotes H, halogen, alkyl, alkoxy, $-CN$, $-CF_3$, or carbamoyl or, together with $R^5$, a radical for completing a fused-on benzene ring; and

$R^5$ and $R^6$ (identical or different) denote H, halogen, $-CN$, carbalkoxy, carbamoyl, sulphinic acid (sulphinyl), sulphonic acid (sulphonate), sulphamoyl, alkyl- or arylsulphonyl or (in the m-position to the azo group) $-NO_2$, or $R^5$ denotes, together with $R^3$ or $R^6$, a radical for completing a fused-on benzene ring.

4. Use of azo dyes according to Claim 1 for producing light-stable magenta images.

5.Colour-photographic recording material for the production of coloured images by the dye diffusion transfer process, which contains, in association with at least one light-sensitive silver halide

emulsion layer, a non-diffusing colour-providing compound from which a diffusible monoazo dye capable of forming complexes with metal ions is released under the conditions of alkaline development as a function of the development of the silver halide emulsion layer, characterised in that the monoazo dye corresponds to the following formula I:

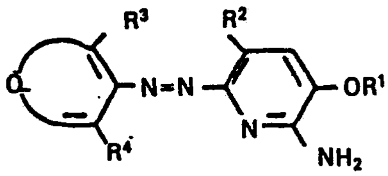

I

wherein

Q denotes the radical required for completing a phenyl or naphthyl group;

$R^1$ denotes H;

$R^2$ denotes H, halogen or an alkyl- or arylsulphonyl group; and

$R^3$ and $R^4$ (identical or different) denote H or a substituent not capable of chelate formation.

6. Recording material according to Claim 5, characterised in that the monoazo dye corresponds to the following formula II:

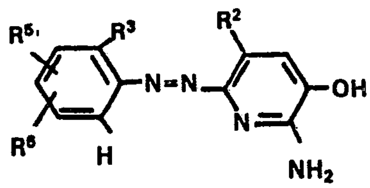

II

wherein

$R^2$ denotes H, halogen or an alkyl- or arylsulphonyl groupe;

$R^3$ denotes H, halogen, alkyl, alkoxy, –CN, $-CF_3$, or carbamoyl or, together with $R^5$, a radical for completing a fused-on benzene ring; and

$R^5$ and $R^6$ (identical or different) denote H, halogen, –CN, carbalkoxy, carbamoyl, sulphinic acid (sulphinyl), sulphonic acid (sulphonate), sulphamoyl, alkyl- or arylsulphonyl or (in the m-position to the azo group) $-NO_2$, or $R^5$ denotes, together with $R^3$ or $R^6$, a radical for completing a fused-on benzene ring.

7. Colour image, consisting of an imagewise distribution of a magenta dye arranged on a layer support, characterised in that the magenta dye is a nickel complex of a monoazo dye of the formula I

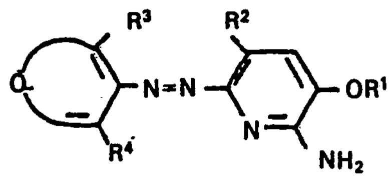

I

wherein

Q denotes the radical required for completing a phenyl or naphthyl group;

$R^1$ denotes H;

$R^2$ denotes H, halogen or an alkyl- or arylsulphonyl groupe; and

$R^3$ and $R^4$ (identical or different) denote H or a substituent not capable of chelate formation.

8. Colour image according to Claim 7, characterised in that the magenta dye is a nickel complex of a monoazo dye of the following formula II:

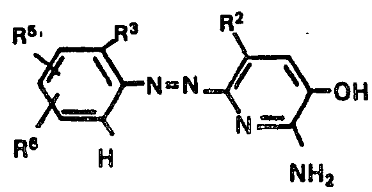

II

wherein

$R^2$ denotes H, halogen or an alkyl- or arylsulphonyl group;

$R^3$ denotes H, halogen, alkyl, alkoxy, –CN, $-CF_3$, or carbamoyl or, together with $R^5$, a radical for completing a fused-on benzene ring; and

$R^5$ and $R^6$ (identical or different) denote H, halogen, –CN, carbalkoxy, carbamoyl, sulphinic acid (sulphinyl), sulphanic acid (sulphonate), sulphamoyl, alkyl- or arylsulphonyl or (in the m-position to the azo group) $-NO_2$, or $R^5$ denotes, together with $R^3$ or $R^6$, a radical for completing a fused-on benzene ring.